# FASCICULE DE BREVET EUROPEEN

(11) **EP 0 677 241 B1**
(45) Date de publication et mention de la délivrance du brevet: **08.12.1999**
(21) Numéro de dépôt: 95440014.9
(22) Date de dépôt: 04.04.1995
(51) Int. Cl.: A01D 75/20, A01D 78/10

(54) **Machine de fenaison, notamment un andaineur, avec au moins un dispositif d'arrêt du rotor**
Heuwerbungsmaschine, namentlich ein Schwader, mit mindestens einer Anhaltevorrichtung des Rotors
Haymaking machine, especially a swather, with at least one stopping device for the rotor

(30) Priorité: 12.04.1994 FR 9404571
(43) Date de publication de la demande: 18.10.1995
(73) Titulaire: KUHN S.A., F-67700 Saverne (FR)
(72) Inventeur: Aron, Jérôme, F-67330 Dossenheim sur Zinsel (FR)
(74) Mandataire: Andres, Jean-Claude

(56) Documents cités:
- EP-A- 0 296 666
- EP-A- 0 300 937
- EP-A- 0 439 068
- EP-A- 0 558 430
- EP-A- 0 622 010
- WO-A-91/18497
- DE-C- 3 926 381
- DE-U- 9 115 158
- US-A- 4 445 312

## Description

La présente invention se rapporte à une machine de fenaison, notamment un andaineur, comportant un bâti qui peut être accroché à un tracteur et qui porte au moins un rotor d'andainage entraîné en rotation durant le travail, un protecteur qui entoure au moins partiellement ledit rotor et qui possède au moins une partie repliable en vue de réduire ses dimensions, au moins un dispositif d'arrêt de l'entraînement en rotation du rotor et au moins un moyen d'actionnement du dispositifd'arrêt qui est lié à la ou aux parties repliables du protecteur.

Sur une machine de ce genre, la rotation du rotor est arrêtée lorsque la partie repliable du protecteur est relevée, par exemple pour pouvoir effectuer une intervention sur ledit rotor ou pour le transport. Le risque qu'un rotor entraîné en rotation heurte une personne et la blesse gravement ou bien cogne dans un obstacle et subit lui-même d'importants dégâts est ainsi supprimé.

Une machine de ce genre est connue dans la demande de brevet EP-A-0 558 430. Sur cette machine le rotor d'andainage est entraîné en rotation à partir d'un arbre de prise de force situé sur le tracteur. Les moyens d'entraînement comprennent plusieurs arbres de transmission et des carters intermédiaires. Le dispositif d'arrêt de l'entraînement comprend notamment un baladeur qui est déplaçable sur des arbres de transmission de manière à assurer ou interrompre la liaison entre eux. La position du baladeur est commandée par une tige de manoeuvre et un flexible qui est lié à ladite tige et à une partie repliable du protecteur.

La demande de brevet WO 91/18497 décrit une machine de fenaison avec des rotors entraînés en rotation par des moteurs hydrauliques. Cette machine ne comporte ni dispositif de protection ni dispositif d'arrêt de l'entraînement des rotors. Ceux-ci peuvent blesser une personne qui arrive dans leurs trajectoires ou bien cogner dans des obstacles.

La présente invention a pour but de proposer une machine de fenaison telle que décrite dans l'introduction et qui est plus simple que la machine connue et ne présente pas les risques sus-mentionnés.

A cet effet, une importante caractéristique de l'invention consiste en ce que le rotor est entraîné en rotation durant le travail par un moteur hydraulique qui est alimenté au moyen de conduits hydrauliques et que le dispositif d'arrêt est placé sur un des conduits hydrauliques allant audit moteur hydraulique.

Ledit dispositif d'arrêt peut être constitué par un distributeur à tiroir permettant de fermer et d'ouvrir le passage de l'huile. Il est ainsi possible de bloquer la circulation de l'huile qui anime le moteur hydraulique et par conséquent d'arrêter l'entraînement du rotor indépendamment des moyens de commande de ladite circulation qui se trouvent généralement sur le tracteur. Par ailleurs, étant donné que le moyen qui actionne ledit distributeur à tiroir est lié à la ou aux parties repliables du protecteur, c'est la position de cette ou de ces parties qui détermine l'ouverture ou la fermeture du conduit hydraulique. Ce moyen d'actionnement est agencé de telle sorte que le distributeur à tiroir coupe le circuit de l'huile lorsqu'une partie repliable du protecteur est déplacée vers la position de transport. L'entraînement du rotor est alors interrompu aussi longtemps que ladite partie repliable n'est pas ramenée dans la position où elle assure sa fonction de protection. Le risque d'une mise en rotation du rotor sans que la protection soit assurée est par conséquent supprimé.

Selon une autre caractéristique de l'invention, le protecteur comporte deux parties repliables et le dispositif d'arrêt se compose de deux distributeurs à tiroir dont chacun est relié à une desdites parties repliables. Dans ce mode de réalisation, chacune des parties repliables du protecteur commande son propre distributeur à tiroir.

Une autre caractéristique de l'invention consiste en ce que le dispositif d'arrêt se compose d'un distributeur à tiroir dont le moyen d'actionnement est constitué par une butée qui est solidaire de la tige d'un vérin hydraulique servant à déplacer la ou les parties repliables du protecteur. Cette butée est avantageusement agencée de telle sorte qu'elle actionne le distributeur à tiroir avant de déplacer la ou les parties repliables vers la position de transport. Cela évite l'intervention manuelle d'un opérateur et garantit l'arrêt de l'entraînement du rotor avant le repliement d'une partie du protecteur.

Une autre caractéristique de l'invention consiste en ce que la machine possède au moins un rotor qui est lié à un bras support déplaçable en hauteur et qu'elle comporte deux dispositifs d'arrêt de l'entraînement dudit rotor. A ces dispositifs d'arrêt sont associés des moyens d'actionnement dont l'un est lié à une partie repliable du protecteur et l'autre au bras support. Selon cet agencement, l'arrêt de l'entraînement du rotor est assuré à la fois lorsqu'une partie du protecteur est repliée et lorsque le rotor est soulevé au moyen de son bras porteur.

D'autres caractéristiques et avantages de l'invention ressortiront de la description ci-après d'exemples de réalisation non limitatifs de l'invention, avec référence aux dessins annexés dans lesquels :
- la figure 1 représente une vue de dessus d'une machine selon l'invention en position de travail ;
- la figure 2 représente schématiquement le dispositif d'arrêt et le moyen d'actionnement selon l'exemple de la figure 1 ;
- les figures 3 à 5 représentent schématiquement d'autres exemples de réalisation des dispositifs d'arrêt et de leurs moyens d'actionnement ;
- la figure 6 représente une vue de derrière d'un autre exemple de réalisation d'une machine selon l'invention.

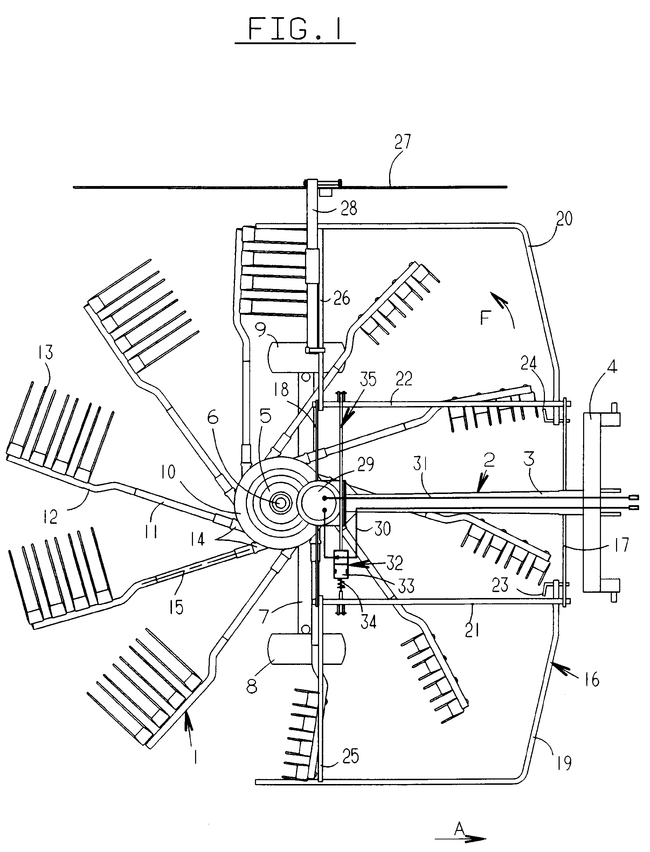

La machine de fenaison représentée sur la figure 1 est un andaineur comportant un rotor d'andainage (1) porté par un bâti (2). Celui-ci est constitué par une poutre (3) qui est dirigée dans la direction d'avancement (A) et qui est munie à son extrémité la plus en avant d'un chevalet d'attelage trois points (4). Ce chevalet (4) permet l'accouplement de l'andaineur à un tracteur d'entraînement non représenté. L'autre extrémité de la poutre (3) porte un demi-carter (5) qui est ouvert vers le bas. Ce demi-carter (5) possède à peu près en son milieu un orifice dans lequel est fixé un axe (6) qui est dirigé sensiblement verticalement vers le bas. L'extrémité inférieure de cet axe (6) porte un support transversal (7) avec deux roulettes (8, 9) qui peuvent prendre appui sur le sol.

Le rotor (1) est monté sur l'axe (6) de manière à pouvoir tourner autour de celui-ci. Il se compose d'un boîtier rotatif (10) équipé de plusieurs bras (11) qui s'étendent vers l'extérieur et qui comportent des parties extérieures (12) démontables. Ces bras (11) sont munis à leurs extrémités les plus éloignées du boîtier (10) de fourches de râtelage (13). Ils sont montés dans des paliers (14) liés audit boîtier (10), de manière à pouvoir pivoter autour de leurs axes géométriques longitudinaux (15). Dans le volume intérieur du boîtier (10) se situe une came de commande qui est fixée sur l'axe (6). Chaque bras porte-fourches (11) possède à son extrémité située à l'intérieur du boîtier (10) un galet qui coopère avec ladite came de commande.

Le mode de réalisation du rotor (1) peut être différent de celui décrit ci-dessus. Il peut par exemple comporter des bras porte-fourches non commandés.

Le bâti (2) porte en sus un protecteur (16) qui entoure au moins partiellement le rotor (1). Ce protecteur (16) empêche les personnes ou les animaux d'entrer dans la trajectoire des bras porte-fourches (11). Il évite aussi que lesdits bras (11) rencontrent des obstacles qui pourraient les endommager. Ledit protecteur (16) se compose de deux barres centrales (17 et 18) dont l'une est fixée sur la poutre (3) et l'autre sur le demi-carter (5) et de deux parties latérales repliables (19 et 20). Ces dernières sont articulées sur les barres centrales (17 et 18) au moyen d'axes (21 et 22) qui sont dirigés dans la direction d'avancement (A). Ces deux axes (21 et 22) permettent de replier les parties latérales (19 et 20) d'une position horizontale pour le travail jusque dans une position verticale pour le transport. Elles peuvent être bloquées dans chacune de ces positions avec des broches (23 et 24). Chacune de ces parties repliables (19 et 20) est constituée par un tube coudé sensiblement en forme de L. Une première branche de chaque tube en L est solidaire de l'axe d'articulation (21 ou 22) correspondant et s'étend quasiment dans le prolongement de la barre avant (17). La deuxième branche de chaque tube en L est dirigée vers l'arrière et est reliée à l'axe d'articulation (21 ou 22) correspondant par une traverse (25 ou 26). Tel qu'il est représenté sur la figure 1, le protecteur (16) s'étend sur la moitié avant - vu dans la direction d'avancement (A)- et sur les côtés du rotor (1). Vu qu'au travail l'andaineur est déplacé dans la direction d'avancement (A) il n'y a pratiquement aucun risque qu'une personne ou un animal touche le rotor (1) sur le côté arrière. Il est néanmoins possible de prolonger les parties latérales (19 et 20) vers le côté arrière du rotor (1) afin qu'elles assurent également une protection de ce côté.

Un déflecteur (27) est relié à la partie latérale repliable (20) du protecteur (16) au moyen d'une tige (28). Ce déflecteur (27) se situe latéralement au rotor (1) de manière à limiter la projection latérale du fourrage déplacé. Il est constitué par une grille ou une toile de forme rectangulaire. Sa hauteur est à peu près égale à celle du rotor (1) lui-même.

Le boîtier (10) du rotor (1) comporte à sa face supérieure une couronne dentée. Celle-ci engrène avec un pignon qui est fixé sur un arbre d'un moteur d'entraînement hydraulique (29). Ce moteur (29) est fixé sur le demi-carter (5). Il est relié à une pompe hydraulique qui fait circuler l'huile assurant son animation au moyen de deux conduits hydrauliques (30 et 31) dont l'un (30) sert à l'arrivée de l'huile dudit moteur (29) et l'autre (31) au retour. Ladite pompe peut être celle de l'équipement hydraulique du tracteur. Dans ce cas, les deux conduits (30 et 31) sont branchés sur les prises hydrauliques de ce dernier. L'andaineur peut aussi être équipé d'une installation hydraulique comprenant sa propre pompe. Les conduits (30 et 31) sont alors branchés sur cette pompe. Un dispositif d'arrêt (32) est placé sur le conduit hydraulique (30). Il pourrait cependant également se situer sur l'autre conduit (31). Dans les exemples représentés, ce dispositif d'arrêt (32) est constitué par un distributeur à tiroir (33) à deux positions. Dans l'une de ces positions, le passage dans le conduit hydraulique (30 ou 31) est ouvert tandis que dans l'autre position le passage est fermé. Il est prévu un ressort (34) qui pousse le tiroir du distributeur (33) dans la position dans laquelle ledit passage est ouvert. Ce dispositif d'arrêt (32) pourrait également être constitué par une vanne ou un autre moyen équivalent.

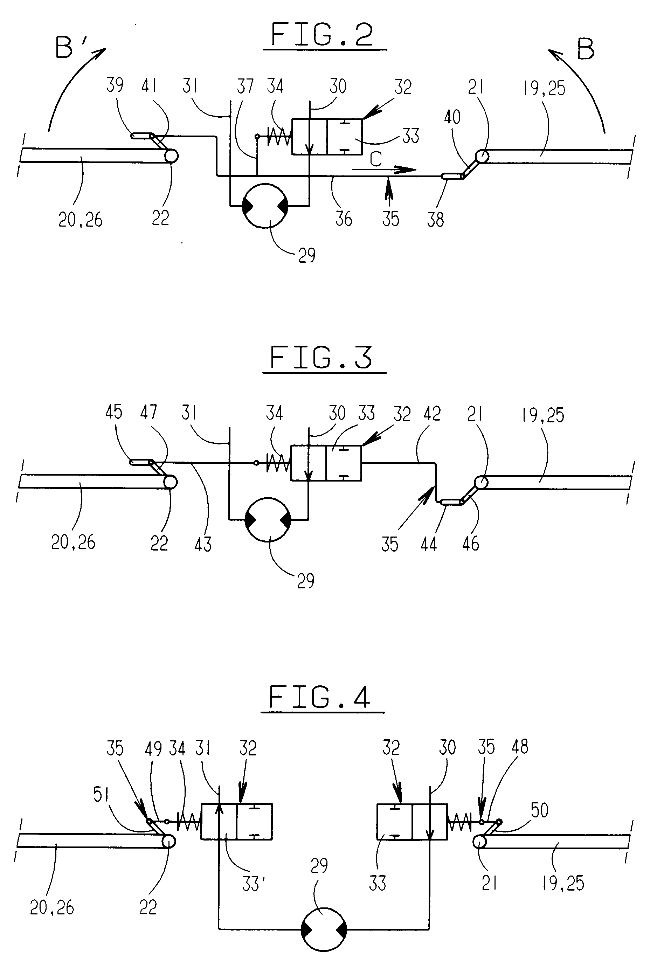

Un moyen d'actionnement (35) du dispositif d'arrêt (32) relie ce dernier aux parties repliables (19 et 20) du protecteur (16). Comme cela ressort de la figure 2, le moyen d'actionnement (35) est constitué par une tringle coudée (36) munie d'une tige (37) qui est liée au tiroir du distributeur (33). La tringle (36) comporte à chacune de ses extrémités un orifice oblong (38, 39). Chaque partie repliable (19, 20) du protecteur (16) (en l'occurence leurs axes (21 et 22)) possède un levier (40, 41) avec une extrémité coudée qui se situe dans un desdits orifices oblongs (38 et 39). La longueur de chacun de ces orifices oblongs (38 et 39) est sensiblement égale à la valeur du déplacement de l'extrémité coudée du levier (40, 41) lorsque la partie repliable (19, 20) correspondante est déplacée autour de son axe (21, 22). En sus, ces orifices oblongs (38 et 39) et les leviers (40 et 41) sont agencés de telle sorte que les extrémités coudées de ces leviers (40 et 41) sont en butée sur le même côté dans les orifices (38 et 39) (côté droit de chacun de ces orifices sur la figure 2) lorsque les parties repliables (19 et 20) sont sensiblement horizontales et que le déplacement vers le haut de n'importe laquelle de ces parties repliables (19 et 20) provoque un déplacement de la tringle (36) et la fermeture du distributeur (33), sans que ce déplacement n'entraîne l'autre partie repliable (19 ou 20). D'autre part, lors du déplacement vers le bas des parties latérales (19 et 20), seule celle qui est déplacée en dernier lieu libère la tringle (36) de sorte que le distributeur (33) puisse s'ouvrir.

Dans l'exemple de réalisation représenté sur la figure 3, le dispositif d'arrêt (32) est également constitué par un distributeur à tiroir (33) placé sur le conduit d'alimentation (30) du moteur hydraulique (29). Le moyen d'actionnement (35) est constitué par deux tringles (42 et 43). Chacune est reliée par l'une de ses extrémités au tiroir du distributeur (33). La deuxième extrémité de chaque tringle (42, 43) est liée à une des parties repliables (19, 20) du protecteur (16). A cet effet, cette deuxième extrémité de chaque tringle (42, 43) présente un orifice oblong (44, 45) dans lequel est engagée l'extrémité coudée d'un levier (46, 47) qui est solidaire de la partie repliable (19, 20) correspondante du protecteur (16). Comme dans l'exemple précédent, la longueur de chacun de ces orifices oblongs (44, 45) est sensiblement égale à la valeur du déplacement de l'extrémité coudée du levier (46, 47) correspondant autour de l'axe (21 ou 22). Ces orifices oblongs (44, 45) et les leviers (46, 47) sont agencés de telle sorte que leurs extrémités coudées soient en butée sur le même côté des orifices oblongs (44, 45) lorsque les parties repliables (19 et 20) sont sensiblement horizontales, et que le déplacement vers le haut de l'une quelconque des parties repliables (19, 20) provoque un déplacement des deux tringles (42 et 43) et la fermeture du distributeur (33). Ce déplacement ne se répercute pas sur la deuxième partie repliable (19 ou 20). De même, lors du retour dans la position horizontale des parties latérales (19, 20), seule celle qui est déplacée en dernier lieu libère le tiroir du distributeur (33) de sorte qu'il puisse s'ouvrir.

Dans l'exemple de réalisation selon la figure 4, le dispositif d'arrêt (32) se compose de deux distributeurs à tiroir (33 et 33'). L'un (33) de ces distributeurs se situe sur le conduit d'alimentation (30) du moteur hydraulique (29) et l'autre (33') sur le conduit de retour (31). Chacun de ces distributeurs à tiroir (33, 33') est relié à une des parties repliables (19, 20) du protecteur (16) par l'intermédiaire d'un moyen d'actionnement (35). Chaque moyen d'actionnement (35) est constitué par une tringle (48, 49) dont une des extrémités est reliée au distributeur (33, 33') correspondant et l'autre à un levier (50, 51) qui est solidaire d'une des parties latérales (19, 20) du protecteur (16).

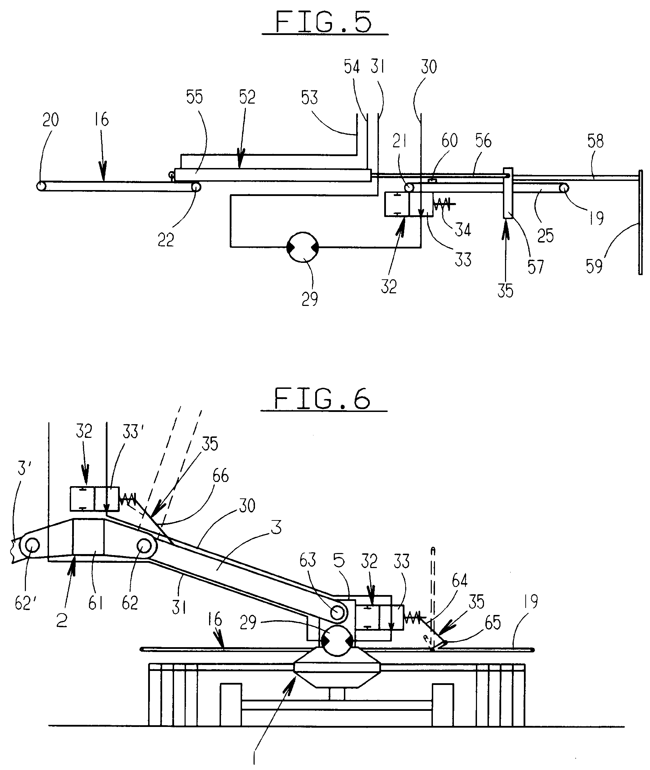

Dans l'exemple de réalisation selon la figure 5, les deux parties repliables (19 et 20) du protecteur (16) sont déplaçables au moyen d'un vérin hydraulique (52). Celui-ci est relié par des conduits (53 et 54) au circuit hydraulique du tracteur qui permet de l'actionner. Le corps (55) de ce vérin hydraulique (52) est articulé sur la partie repliable (20) du protecteur (16). Sa tige (56) porte une butée (57) qui est guidée de manière à pouvoir se déplacer longitudinalement sur la traverse (25) de la seconde partie repliable (19) du protecteur (16). D'autre part, ladite butée (57) porte un bras (58) qui s'étend au-delà du protecteur (16) et auquel est relié un déflecteur latéral (59) analogue au déflecteur (27) de la figure 1. Ce déflecteur (59) peut ainsi être éloigné ou rapproché du rotor (1) au moyen du vérin hydraulique (52). Le dispositif d'arrêt (32) est constitué par un distributeur à tiroir (33) placé sur le conduit d'alimentation (30) du moteur hydraulique (29). Ce distributeur (33) est avantageusement fixé sur la traverse (25) de la partie repliable (19). Le moyen d'actionnement (35) de ce distributeur (33) est constitué par la butée (57) qui est solidaire de la tige (56). A cet effet, ladite butée (57) s'étend vers le bas de sorte qu'elle rencontre le distributeur à tiroir (33) lorsqu'elle est déplacée avec la tige (56) du vérin (52). Sur la traverse (25) est prévu un arrêt (60) qui limite le déplacement de la butée (57) et qui provoque le relevage de la partie latérale (19) autour de son axe (21). La face de cet arrêt (60) contre laquelle s'appuie alors la butée (57) se situe entre le corps du distributeur (33) et l'extrémité avant de son tiroir.

L'exemple selon la figure 6 se rapporte à une machine sur laquelle la poutre (3) qui porte le rotor (1) est articulée sur un longeron (61) du bâti (2) au moyen d'un axe (62) dirigé dans la direction d'avancement (A). Ce longeron (61) possède à son extrémité avant un dispositif d'accrochage à un tracteur et à son extrémité arrière un train de roues porteuses. Une deuxième poutre (3') avec un rotor similaire au rotor (1) peut être articulée au longeron (61) de manière à augmenter la largeur de travail de la machine. Chaque poutre (3, 3') peut être déplacée autour de son axe d'articulation (62, 62') jusque dans une position sensiblement verticale pour le transport. Cette position est indiquée en traits interrompus. Ce déplacement est avantageusement effectué au moyen de vérins hydrauliques.

Chaque rotor (1) de cette machine est sensiblement identique à celui décrit en liaison avec l'exemple de la figure 1. Le demi-carter fixe (5) est articulé sur la poutre (3) au moyen d'un axe (63) qui est dirigé dans la direction d'avancement (A). Cet axe (63) permet notamment au rotor (1) de s'adapter aux dénivellations du sol.

La machine selon la figure 6 comporte deux dispositifs d'arrêt (32) de l'entraînement de chacun de ses rotors (1). Ces dispositifs d'arrêt (32) sont constitués par des distributeurs à tiroir (33, 33') qui sont disposés sur un des conduits (30, 31) alimentant le moteur hydraulique (29) de chaque rotor (1). Le premier distributeur à tiroir (33) est fixé sur le demi-carter (5) du rotor (1). Ce premier distributeur à tiroir (33) est actionné par un dispositif (35) qui est constitué par une tringle (64). Celle-ci est liée à un levier (65) qui est solidaire d'une partie repliable (19) du protecteur (16). Le deuxième distributeur à tiroir (33') est fixé sur le longeron (61). Son dispositif d'actionnement (35) est constitué par une butée ou un levier (66) qui est solidaire de la poutre support (3) du rotor d'andainage (1) correspondant.

Les distributeurs à tiroir (33, 33') précités présentent une position ouverte et une position fermée. Sur les distributeurs placés sur le conduit d'alimentation (30) des moteurs hydrauliques (29) la position fermée pourrait être remplacée par une position dans laquelle l'huile est déviée vers un conduit additionnel qui est directement raccordé au conduit de retour (31). Dans ce cas, l'alimentation des moteurs hydrauliques (29) pourrait être interrompue sans que la circulation de l'huile dans le circuit soit stoppée.

Durant le travail, l'andaineur selon les figures 1 et 2 est accouplé à un tracteur qui permet de le déplacer dans la direction (A). Les roulettes (8 et 9) roulent alors sur le sol. Les deux parties latérales (19 et 20) du protecteur (16) sont bloquées dans la position sensiblement horizontale. Le déflecteur (27) se situe sur le côté du rotor (1), à une certaine distance de celui-ci.

Les deux conduits hydrauliques (30 et 31) sont reliés aux prises hydrauliques du tracteur ou à la pompe d'un équipement propre à l'andaineur. Le distributeur (33) est dans la position où le passage de l'huile dans le conduit d'alimentation (30) est ouvert (position représentée sur la figure 2). L'huile circule alors dans les conduits (30 et 31) et anime le moteur hydraulique (29). Celui-ci entraîne le boîtier (10) avec les bras porte-fourches (11) en rotation autour de l'axe (6), dans le sens de la flèche (F). Durant cette rotation, les galets des extrémités desdits bras (11) se déplacent dans la came de commande qui est logée dans le boîtier (10). Cette came guide lesdits galets de telle sorte qu'ils fassent pivoter les bras (11) avec les fourches de râtelage (13) sur eux-mêmes lors de chaque révolution. Lesdites fourches (13) sont alors dirigées vers le sol dans la partie avant de leur trajectoire et ramassent le fourrage qui se trouve sur le sol. Dès qu'elles arrivent avec leurs bras (11) dans la partie latérale de leur trajectoire, dans laquelle elles se déplacent vers le côté arrière du rotor (1), lesdites fourches (13) sont pivotées vers le haut d'un angle d'environ 90°. Elles déposent alors le fourrage ramassé sous la forme d'un andain.

Pour le transport, la largeur de la machine doit être réduite afin de faciliter les déplacements. A cet effet, les deux parties latérales (19 et 20) du protecteur (16) peuvent être repliées vers le haut et les bras porte-fourches (11) peuvent être raccourcis, par démontage de leurs extrémités extérieures (12). Pour effectuer ledit repliage, il y a lieu de retirer les broches de verrouillage (23, 24) et de pivoter les parties latérales (19 et 20) autour des axes d'articulation (21 et 22) dans les directions indiquées par les flèches (B et B') sur la figure 2. Dès que l'opérateur pivote l'une quelconque de ces parties (19, 20) son levier (40 ou 41) tire ou pousse la tringle (36) dans la direction (C). Cette dernière actionne avec la tige (37) le tiroir du distributeur (33) de telle sorte qu'il ferme le passage dans le conduit d'alimentation (30) du moteur hydraulique (29). Dès lors, l'entraînement de ce dernier est coupé même si cela n'a pas été fait au niveau de la pompe de l'équipement hydraulique du tracteur ou de la machine.

La rotation du rotor (1) est ainsi arrêtée aussi longtemps que l'une quelconque des parties latérales (19 et 20) du protecteur (16) est relevée, ce qui permet d'accéder sans risque audit rotor (1).

Ensuite, l'opérateur déverrouille l'autre partie latérale (19 ou 20) et la déplace vers le haut jusque dans la position sensiblement verticale. Durant cette opération, l'extrémité de son levier (40 ou 41) se déplace librement par rapport à la tringle (36) dans l'orifice oblong (38 ou 39) correspondant. Les deux parties latérales (19 et 20) peuvent également être bloquées dans la position verticale au moyen des broches (23 et 24) qu'on engage dans des orifices prévus à cet effet.

Pour revenir dans la position de travail, l'opérateur déverrouille une des parties latérales (19, 20) et la fait pivoter autour de son axe d'articulation (21 ou 22) jusque dans la position horizontale. Lors de ce pivotement, l'extrémité du levier (40 ou 41) de la partie latérale (19, 20) concernée se déplace librement dans l'orifice oblong (38 ou 39) de la tringle (36). Ensuite, lorsqu'il fait pivoter l'autre partie latérale (19 ou 20) le levier (40 ou 41) de celle-ci libère la tringle (36).

Le ressort (34) repousse alors la tige (37) et ladite tringle (36) et provoque le déplacement du tiroir du distributeur (33). Celui-ci se replace ainsi dans la position dans laquelle le passage dans le conduit hydraulique (30) est ouvert. Dans cette position, le protecteur (16) assure correctement sa fonction et le moteur hydraulique (29) pourra à nouveau être animé.

L'exemple de réalisation selon la figure 3 fonctionne de la même manière que l'exemple précité. Les deux tringles (42 et 43) et le tiroir du distributeur (33) forment un ensemble qui agit comme la tringle (36) précitée, lorsque les parties latérales (19 et 20) du protecteur (16) sont déplacées autour de leurs axes d'articulation (21 et 22).

Lorsque dans l'exemple selon la figure 4 l'opérateur relève l'une quelconque des parties latérales (19, 20) dans la position de transport, son levier (50 ou 51) actionne la tringle (48 ou 49) à laquelle il est relié. Celle-ci déplace alors le tiroir du distributeur (33 ou 33') correspondant de sorte qu'il ferme le passage dans le conduit hydraulique (30 ou 31) sur lequel il est situé. De ce fait, la circulation de l'huile est bloquée et le moteur hydraulique (29) est arrêté.

La partie latérale (19 ou 20) qui est déplacée en second lieu provoque de la même manière la fermeture de l'autre distributeur (33 ou 33').

Inversement, lorsque l'opérateur transpose la machine dans la position de travail, il déplace l'une après l'autre les parties latérales (19 et 20) dans la position horizontale. Chaque partie (19, 20) provoque alors l'ouverture du distributeur (33 ou 33') correspondant. Toutefois, le circuit dans les conduits (30 et 31) n'est rétabli que lorsque les deux distributeurs (33 et 33') sont ouverts. L'entraînement du rotor (1) par le moteur hydraulique (29) ne peut donc avoir lieu qu'à partir du moment où les deux parties latérales (19 et 20) du protecteur (16) sont correctement positionnées.

Dans l'exemple selon la figure 5, la transposition des parties latérales (19 et 20) du protecteur (16) dans la position de transport s'effectue au moyen du vérin hydraulique (52). Lorsque celui-ci est actionné pour qu'il se rétracte, sa tige (56) rapproche tout d'abord le déflecteur (59) du rotor (1). Ensuite la butée (57) vient en contact avec le tiroir du distributeur (33) et l'actionne de telle sorte qu'il ferme le passage dans le conduit d'alimentation (30) du moteur hydraulique (29). Ce dernier est alors automatiquement arrêté. Immédiatement après cela, la butée (57) rencontre l'arrêt (60) et entraîne la partie latérale (19) vers le haut, autour de l'axe d'articulation (21). Dès que cette partie latérale (19) atteint sa position relevée, la traction du vérin hydraulique (52) provoque le pivotement vers le haut, autour de l'axe d'articulation (22), de la seconde partie latérale (20).

Pour revenir dans la position de travail, l'opérateur actionne le vérin hydraulique (52) pour qu'il s'allonge. Dans un premier temps, les deux parties latérales (19 et 20) pivotent vers le bas autour des axes (21 et 22) jusqu'à ce qu'elles se retrouvent dans la position horizontale. Ensuite, la tige (56) dudit vérin hydraulique (52) pousse la butée (57) sur la traverse (25) de sorte qu'elle libère le tiroir du distributeur (33). Celui-ci revient alors automatiquement dans la position dans laquelle le passage dans le conduit d'alimentation (30) est ouvert.

Dans l'exemple de réalisation selon la figure 6, la transposition de chaque rotor (1) dans la position de transport nécessite deux opérations. La première de ces opérations consiste à réduire les dimensions des rotors (1) et la seconde consiste à relever lesdits rotors (1) au moyen des poutres (3, 3') dans une position sensiblement verticale afin de réduire la largeur de la machine. Pour les petits déplacements ou pour faire demi-tour en bout de terrain, il est également possible de relever les rotors (1) sans réduire préalablement leurs dimensions.

Pour effectuer la première desdites opérations, l'opérateur replie la partie latérale (19) du protecteur de chaque rotor (1) vers le haut et raccourcit les bras porte-fourches (11). De cette manière, il réduit la largeur des rotors (1) et par conséquent la hauteur de l'ensemble lorsque lesdits rotors (1) sont relevés dans la position sensiblement verticale. Lors du repliement de la partie latérale (19) son levier (65) et la tringle (64) actionnent le tiroir du distributeur (33). Celui-ci ferme alors le passage de l'huile dans le conduit d'alimentation (30) du moteur hydraulique (29). L'entraînement du rotor (1) est donc automatiquement coupé.

D'autre part, lors du relevage de la poutre (3) dans la position sensiblement verticale, son levier (66) actionne le tiroir du distributeur (33') de sorte qu'il ferme également le passage de l'huile dans le conduit d'alimentation (30). Cette fermeture est très importante en cas de petits déplacements ne nécessitant pas le repliage de la partie latérale (19) du protecteur (16) du rotor (1). Le distributeur (33') coupe alors l'entraînement du moteur hydraulique (29), ce qui immobilise le rotor (1) correspondant.

Pour le retour en position de travail, chaque rotor (1) est abaissé avec sa poutre (3 ou 3') jusqu'à ce qu'il touche le sol. Lors de ce déplacement, le levier (66) libère le tiroir du distributeur (33'). Celui-ci revient alors dans sa position où le passage dans le conduit d'alimentation (30) est ouvert. Ensuite, s'il y a lieu, l'opérateur déplace la partie latérale (19) du protecteur (16) dans la position sensiblement horizontale. Le levier (65) et la tringle (64) libèrent alors le tiroir du distributeur (33) qui revient dans la position où le passage dans le conduit d'alimentation (30) est ouvert. Dans cette position, le moteur hydraulique (29) pourra à nouveau être animé en vue de l'entraînement du rotor (1).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de fenaison, notamment un andaineur, comportant un bâti (2) qui peut être accroché à un tracteur et qui porte au moins un rotor d'andainage (1) entraîné en rotation durant le travail, un protecteur (16) qui entoure au moins partiellement le rotor (1) et qui possède au moins une partie repliable (19, 20) en vue de réduire ses dimensions, au moins un dispositif d'arrêt (32) de l'entraînement en rotation du rotor (1) et au moins un moyen d'actionnement (35) du dispositif d'arrêt (32) qui est lié à la ou aux parties repliables (19, 20) du protecteur (16), caractérisée par le fait que le rotor (1) est entraîné en rotation durant le travail par un moteur hydraulique (29) qui est alimenté au moyen de conduits hydrauliques (30, 31) et que le dispositif d'arrêt (32) est placé sur un des conduits hydrauliques (30, 31) allant audit moteur hydraulique (29).

2. Machine selon la revendication 1, caractérisée par le fait que le dispositif d'arrêt (32) est constitué par un distributeur à tiroir (33) à plusieurs positions, placé sur un des conduit hydrauliques (30, 31).

3. Machine selon la revendication 2, caractérisée par le fait que le moyen d'actionnement (35) du distributeur à tiroir (33) est constitué par une tringle (36) liée à deux parties repliables (19 et 20) du protecteur (16) et comportant une tige (37) qui est liée au tiroir dudit distributeur (33).

4. Machine selon la revendication 3, caractérisée par le fait que la tringle (36) comporte à chacune de ses extrémités un orifice oblong (38, 39), chaque partie repliable (19, 20) du protecteur (16) comportant un levier (40, 41) dont l'extrémité est engagée dans un de ces orifices oblongs (38, 39).

5. Machine selon la revendication 2, caractérisée par le fait que le moyen d'actionnement (35) du distributeur à tiroir (33) est constitué par deux tringles (42, 43) ayant chacune une extrémité liée au tiroir dudit distributeur (33) et une autre extrémité qui présente un orifice oblong (44, 45) et que le protecteur (16) comporte deux parties repliables (19, 20) possédant chacune un levier (46, 47) dont l'extrémité est engagée dans un des orifices oblongs (44, 45).

6. Machine selon la revendication 4 ou 5, caractérisée par le fait que la longueur de chaque orifice oblong (38, 39, 44, 45) est sensiblement égale à la valeur du déplacement de l'extrémité du levier (40, 41, 46, 47) correspondant des parties repliables (19, 20) du protecteur (16).

7. Machine selon la revendication 4, 5 ou 6, caractérisée par le fait que les extrémités des leviers (40, 41, 46, 47) sont en butée sur le même côté dans les orifices oblongs (38, 39, 44, 45) lorsque les parties repliables (19, 20) du protecteur (16) sont dans la position sensiblement horizontale.

8. Machine selon la revendication 1, caractérisée par le fait que le protecteur (16) comporte deux parties repliables (19, 20) et que le dispositif d'arrêt (32) se compose de deux distributeurs à tiroir (33, 33') dont chacun est relié à une desdites parties repliables (19, 20).

9. Machine selon la revendication 8, caractérisée par le fait que chacun des distributeurs à tiroir (33, 33') est associé à un moyen d'actionnement (35) qui est constitué par une tringle (48 ou 49) dont une des extrémités est liée au tiroir du distributeur (33 ou 33') correspondant et l'autre à un levier (50 ou 51) qui est solidaire de la partie repliable (19 ou 20) correspondante du protecteur (16).

10. Machine selon la revendication 1, caractérisée par le fait que le dispositif d'arrêt (32) se compose d'un distributeur à tiroir (33) placé sur un conduit hydraulique (30) et que le moyen d'actionnement (35) est constitué par une butée (57) qui est solidaire de la tige (56) d'un vérin hydraulique (52) servant à déplacer la ou les parties repliables (19, 20) du protecteur (16).

11. Machine selon la revendication 10, caractérisée par le fait que la butée (57) est agencée de telle sorte qu'elle actionne le distributeur à tiroir (33) avant de déplacer la ou les parties repliables (19, 20) du protecteur (16).

12. Machine selon la revendication 10 ou 11, caractérisée par le fait que le distributeur à tiroir (33) est fixé sur une partie repliable (19) du protecteur (16).

13. Machine selon la revendication 1, caractérisée par le fait qu'elle possède au moins un rotor (1) qui est lié à une poutre support (3) déplaçable vers le haut et qu'elle comporte deux dispositifs d'arrêt (32) de l'entraînement du ou de chaque rotor (1), auxquels sont associés des moyens d'actionnement (35) dont l'un est lié à une partie repliable (19) du protecteur (16) et l'autre à la poutre support (3).

14. Machine selon la revendication 13, caractérisée par le fait que les dispositifs d'arrêt (32) sont constitués par des distributeurs à tiroir (33, 33') disposés sur le conduit hydraulique (30).

15. Machine selon la revendication 14, caractérisée par le fait qu'un premier distributeur à tiroir (33) est fixé sur un demi-carter (5) du ou de chaque rotor (1) et que son dispositif d'actionnement (35) est constitué par une tringle (64) qui est liée à un levier (65) solidaire d'une partie repliable (19) du protecteur (16).

16. Machine selon la revendication 14, caractérisée par le fait qu'un second distributeur à tiroir (33') est fixé sur le bâti (2) et que son dispositif d'actionnement (35) est constitué par un levier (66) solidaire de la poutre support (3) du rotor d'andainage (1) correspondant.

## Claims

1. Hay making machine, especially a swather, comprising a frame (2) which can be attached to a tractor and which bears at least one swathing rotor (1) which is rotated during work, a guard (16) which at least partially surrounds the rotor (1) and has at least one part (19, 20) that can be folded with a view to reducing its dimensions, at least one device (32) for stopping the rotational drive to the rotor (1), and at least one actuating means (35) for actuating the stopping device (32) which is connected to the folding part or parts (19, 20) of the guard (16), ***characterized in*** that the rotor (1) is rotated during work by a hydraulic motor (29) which is supplied by means of hydraulic pipes (30, 31) and that the stopping device (32) is placed on one of the hydraulic pipes (30, 31) leading to the said hydraulic motor (29).

2. Machine according to Claim 1, ***characterized in*** that the stopping device (32) comprises a multi-position slide valve distributor (33) placed on one of the hydraulic pipes (30, 31).

3. Machine according to Claim 2, ***characterized in*** that the actuating means (35) for actuating the slide valve distributor (33) comprises a rod (36) connected to two folding parts (19 and 20) of the guard (16) and a stem (37) which is connected to the slide valve of the said slide valve distributor (33).

4. Machine according to Claim 3, ***characterized in*** that the rod (36) has an oblong orifice (38, 39) at each of its ends, each folding part (19, 20) of the guard (16) comprising a lever (40, 41), the end of which is engaged in one of these oblong orifices (38, 39).

5. Machine according to Claim 2, ***characterized in*** that the actuating means (35) for actuating the slide valve distributor (33) comprises two rods (42, 43) each having one end connected to the slide valve of the said slide valve distributor (33) and another end which has an oblong orifice (44, 45) and that the guard (16) comprises two folding parts (19, 20) each having a lever (46, 47) the end of which is engaged in one of the oblong orifices (44, 45).

6. Machine according to Claim 4 or 5, ***characterized in*** that the length of each oblong orifice (38, 39, 44, 45) is approximately equal to the value of the displacement of the end of the corresponding lever (40, 41, 46, 47) of the folding parts (19, 20) of the guard (16).

7. Machine according to Claim 4, 5 or 6, ***characterized in*** that the ends of the levers (40, 41, 46, 47) are abutted against the same side of the oblong orifices (38, 39, 44, 45) when the folding parts (19, 20) of the guard (16) are in the approximately horizontal position.

8. Machine according to Claim 1, ***characterized in*** that the guard (16) comprises two folding parts (19, 20) and that the stopping device (32) is made up of two slide valve distributors (33, 33') each one of which is connected to one of the said folding parts (19, 20).

9. Machine according to Claim 8, ***characterized in*** that each of the slide valve distributors (33, 33') is associated with an actuating means (35) which consists of a rod (48 or 49), one of the ends of which is connected to the slide valve of the corresponding slide valve distributor (33 or 33') and the other end of which is connected to a lever (50 or 51) which is secured to the corresponding folding part (19 or 20) of the guard (16).

10. Machine according to Claim 1, ***characterized in*** that the stopping device (32) is made up of a slide valve distributor (33) placed on a hydraulic pipe (30) and that the actuating means (35) comprises an abutment (57) which is secured to the rod (56) of a hydraulic jack (52) used to move the folding part or parts (19, 20) of the guard (16).

11. Machine according to Claim 10, ***characterized in*** that the abutment (57) is arranged in such a way that it actuates the slide valve distributor (33) before moving the folding part or parts (19, 20) of the guard (16).

12. Machine according to Claim 10 or 11, ***characterized in*** that the slide valve distributor (33) is secured to a folding part (19) of the guard (16).

13. Machine according to Claim 1, ***characterized in*** that it has at least one rotor (1) which is connected to a support beam (3) that can be moved upwards and that it comprises two stopping devices (32) for stopping the drive of the or each rotor (1), with which devices there are associated actuating means (35), one of which is connected to a folding part (19) of the guard (16) and the other of which is connected to the support beam (3).

14. Machine according to Claim 13, ***characterized in*** that the stopping devices (32) consist of slide valve distributors (33, 33') arranged on the hydraulic pipe (30).

15. Machine according to Claim 14, ***characterized in*** that a first slide valve distributor (33) is fixed to a half gearbox (5) of the or each rotor (1) and that its actuating device (35) consists of a rod (64) which is connected to a lever (65) secured to a folding part (19) of the guard (16).

16. Machine according to Claim 14, ***characterized in*** that a second slide valve distributor (33') is fixed to the frame (2) and that its actuating device (35) consists of a lever (66) secured to the support beam (3) of the corresponding swathing rotor (1).

## Patentansprüche

1. Heuwerbungsmaschine, insbesondere Schwader, mit einem Rahmen (2), der an einen Traktor angehängt werden kann und der mindestens einen im Betrieb drehangetriebenen Schwadrotor (1) trägt, einer Schutzvorrichtung (16), die zumindest teilweise den Rotor (1) umgibt und die mindestens einen klappbaren Teil (19, 20) zur Verringerung ihrer Abmessungen aufweist, mindestens einer Vorrichtung (32) zum Anhalten des Drehantriebs des Rotors (1) und mindestens einem Mittel (35) zur Betätigung der Anhaltevorrichtung (32), das mit dem oder den klappbaren Teil(en) (19, 20) der Schutzvorrichtung (16) verbunden ist, ***dadurch gekennzeichnet,*** daß der Rotor (1) im Betrieb durch einen Hydraulikmotor (29), der über Hydraulikleitungen (30, 31) gespeist wird, drehangetrieben wird und daß die Anhaltevorrichtung (32) an einer der zu dem Hydraulikmotor (29) verlaufenden Hydraulikleitungen (30, 31) angeordnet ist.

2. Maschine nach Anspruch 1, ***dadurch gekennzeichnet,*** daß die Anhaltevorrichtung (32) aus einem Schieberventil (33) mit mehreren Positionen besteht, das an einer der Hydraulikleitungen (30, 31) angeordnet ist.

3. Maschine nach Anspruch 2, ***dadurch gekennzeichnet,*** daß das Mittel (35) zur Betätigung des Schieberventils (33) aus einer Stange (36) besteht, die mit zwei klappbaren Teilen (19 und 20) der Schutzvorrichtung (16) verbunden ist und einen Schaft (37) umfaßt, der mit dem Schieber des Ventils (33) verbunden ist.

4. Maschine nach Anspruch 3, ***dadurch gekennzeichnet,*** daß die Stange (36) an jedem ihrer Enden eine längliche Öffnung (38, 39) aufweist, wobei jeder klappbare Teil (19, 20) der Schutzvorrichtung (16) einen Hebel (40, 41) aufweist, dessen Ende in eine dieser länglichen Öffnungen (38, 39) eingreift.

5. Maschine nach Anspruch 2, ***dadurch gekennzeichnet,*** daß das Mittel (35) zur Betätigung des Schieberventils (33) aus zwei Stangen (42, 43) besteht, die jeweils ein mit dem Schieber des Ventils (33) verbundenes Ende und ein eine längliche Öffnung (44, 45) enthaltendes anderes Ende aufweisen, und daß die Schutzvorrichtung (16) zwei klappbare Teile (19, 20) aufweist, die jeweils einen Hebel (46, 47) besitzen, dessen Ende in eine der länglichen Öffnungen (44, 45) eingreift.

6. Maschine nach Anspruch 4 oder 5, ***dadurch gekennzeichnet,*** daß die Länge jeder länglichen Öffnung (38, 39, 44, 45) im wesentlichen dem Ausmaß der Verschiebung des Endes des dazugehörigen Hebels (40, 41, 46, 47) der klappbaren Teile (19, 20) der Schutzvorrichtung (16) entspricht.

7. Maschine nach Anspruch 4, 5 oder 6, ***dadurch gekennzeichnet,*** daß die Enden der Hebel (40, 41, 46, 47) auf der gleichen Seite in den länglichen Öffnungen (38, 39, 44, 45) anstoßen, wenn sich die klappbaren Teile (19, 20) der Schutzvorrichtung (16) in der im wesentlichen horizontalen Position befinden.

8. Maschine nach Anspruch 1, ***dadurch gekennzeichnet,*** daß die Schutzvorrichtung (16) zwei klappbare Teile (19, 20) aufweist und daß die Anhaltevorrichtung (32) aus zwei Schieberventilen (33, 33') besteht, die jeweils mit einem der klappbaren Teile (19, 20) verbunden sind.

9. Maschine nach Anspruch 8, ***dadurch gekennzeichnet,*** daß jedes der Schieberventile (33, 33') einem Betätigungsmittel (35) zugeordnet ist, das aus einer Stange (48 oder 49) besteht, deren eines Ende mit dem dazugehörigen Schieberventil (33 oder 33') und deren anderes Ende mit einem Hebel (50 oder 51) verbunden ist, der mit dem dazugehörigen klappbaren Teil (19 oder 20) der Schutzvorrichtung (16) fest verbunden ist.

10. Maschine nach Anspruch 1, ***dadurch gekennzeichnet,*** daß die Anhaltevorrichtung (32) aus einem an einer Hydraulikleitung (30) angeordneten Schieberventil (33) besteht und daß das Betätigungsmittel (35) einen Anschlag (57) umfaßt, der fest mit der Stange (56) eines Hydraulikzylinders (52) verbunden ist, die zum Bewegen des oder der klappbaren Teile (19, 20) der Schutzvorrichtung (16) dient.

11. Maschine nach Anspruch 10, ***dadurch gekennzeichnet,*** daß der Anschlag (57) so angeordnet ist, daß er das Schieberventil (33) vor dem Bewegen des oder der klappbaren Teile (19, 20) der Schutzvorrichtung (16) betätigt.

12. Maschine nach Anspruch 10 oder 11, ***dadurch gekennzeichnet,*** daß das Schieberventil (33) an einem klappbaren Teil (19) der Schutzvorrichtung (16) befestigt ist.

13. Maschine nach Anspruch 1, ***dadurch gekennzeichnet,*** daß sie mindestens einen Rotor (1) aufweist, der mit einem nach oben verschiebbaren Stützträger (3) verbunden ist, und daß sie zwei Vorrichtungen (32) zum Anhalten des Antriebs des oder jedes Rotors (1) aufweist, denen Betätigungsmittel (35) zugeordnet sind, von denen eines mit einem klappbaren Teil (19) der Schutzvorrichtung (16) und das andere mit dem Stützträger (3) verbunden ist.

14. Maschine nach Anspruch 13, ***dadurch gekennzeichnet,*** daß die Anhaltevorrichtungen (32) aus an der Hydraulikleitung (30) angeordneten Schieberventilen (33, 33') bestehen.

15. Maschine nach Anspruch 14, ***dadurch gekennzeichnet,*** daß ein erstes Schieberventil (33) an einer Getriebekastenhälfte (5) des oder jedes Rotors (1) befestigt ist und daß seine Betätigungsvorrichtung (35) aus einer Stange (64) besteht, die mit einem fest mit einem klappbaren Teil (19) der Schutzvorrichtung (16) verbundenen Hebel (65) verbunden ist.

16. Maschine nach Anspruch 14, ***dadurch gekennzeichnet,*** daß ein zweites Schieberventil (33') an dem Rahmen (2) befestigt ist und daß seine Betätigungsvorrichtung (35) aus einem fest mit dem Stützträger (3) des dazugehörigen Schwadrotors (1) verbundenen Hebel (66) besteht.
